# FASCICULE DE BREVET EUROPEEN

(11) **EP 4 150 200 B1**
(45) Date de publication et mention de la délivrance du brevet: **29.05.2024**
(21) Numéro de dépôt: 21732437.5
(22) Date de dépôt: 07.05.2021
(51) Int. Cl.: F02K 1/28, F02C 6/08, F01D 17/10, F02K 1/38, F02K 1/46

(54) **CARTER D' ECHAPPEMENT DE TURBOMACHINE**
TURBOMASCHINENABGASGEHÄUSE
TURBOMACHINE EXHAUST CASE

(30) Priorité: 15.05.2020 FR 2004873
(43) Date de publication de la demande: 22.03.2023
(73) Titulaire: SAFRAN AIRCRAFT ENGINES, 75015 Paris (FR)
(72) Inventeur: POU, Romain Harold Patrice, 77550 MOISSY-CRAMAYEL (FR); DAUTREPPE, Frédéric, 77550 MOISSY-CRAMAYEL (FR)
(74) Mandataire: Regimbeau
(86) Numéro de dépôt international: PCT/FR2021/050784
(87) Numéro de publication internationale: WO 2021/229163

(56) Documents cités:
- CH-A- 354 298
- FR-A1- 3 016 654
- FR-A1- 3 044 705
- FR-A1- 3 046 951

## Description

### Domaine technique général

L'invention concerne le domaine des turbomachines, et plus précisément les carters d'échappement de turbomachines et leurs procédés de fabrication.

### Présentation de l'art antérieur

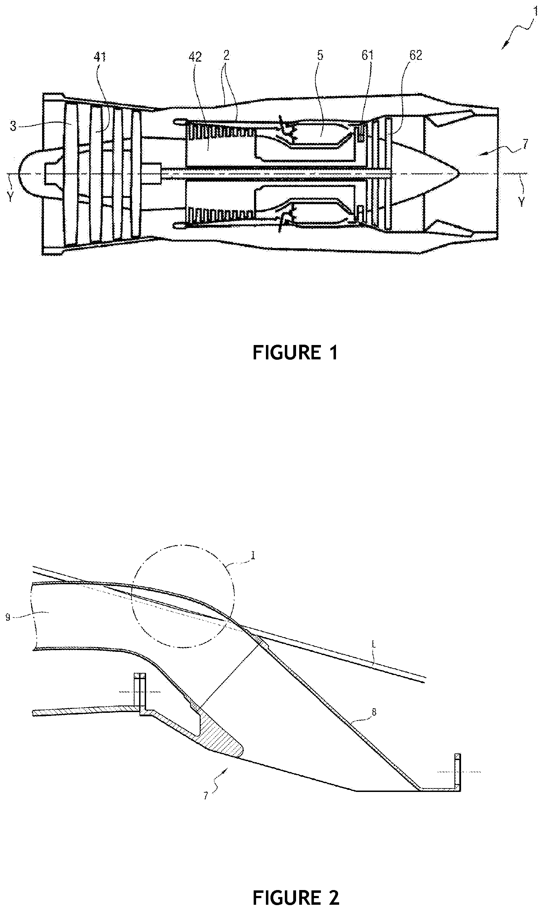

Une turbomachine 1 telle qu'illustrée en figure 1 comporte classiquement un carter 2 délimitant une ou plusieurs veines d'écoulement dans lesquelles circule un flux d'air qui est accéléré par les éléments mobiles de la turbomachine.

Classiquement une turbomachine 1 comporte, dans le sens d'écoulement des fluides dans la turbomachine, une soufflante 3, un compresseur 4, une chambre de combustion 5, une turbine 6 et un échappement 7.

Certaines turbomachines telles que l'exemple illustré en figure 1 comportent deux turbines et deux compresseurs travaillant à des pressions différentes, et comportent donc un compresseur basse pression 41, un compresseur haute pression 42, et, en aval de la chambre de combustion 5, une turbine haute pression 61 et une turbine basse pression 62.

Selon le régime du fonctionnement de la turbomachine 1 (par exemple ralenti, ou pleins gaz), les compresseurs 4 présentent un fonctionnement différent. Lorsque la turbomachine 1 passe d'un régime ralenti à un régime pleins gaz, un flux d'air comprimé à haut débit doit être évacué du compresseur 4, afin d'éviter des risques de pompage. Ceci est également le cas lors des phases transitoires de vol, ou lors des phases de ralenti, ou plus généralement lorsque le pilote est amené à manipuler la commande des gaz.

En général, le flux d'air est prélevé en aval du compresseur haute pression 42 mais un tel prélèvement à température, vitesse et taux de détente élevés génère des niveaux de bruit intenses et induit des contraintes thermiques. Or, une contrainte acoustique de la turbomachine impose que le bruit supplémentaire de l'avion causé par le prélèvement du flux d'air (bruit propre de ce nouveau flux) et par sa réintroduction ultérieure soit inférieur à 1 EPNdB (« Effective Perceived Noise in Decibels », soit le bruit effectif perçu en décibels).

Les solutions de l'art antérieur proposées pour évacuer le flux d'air prélevé ne sont pas satisfaisantes à cet égard.

Il est connu de réintroduire le flux au niveau d'une tuyère d'éjection de la turbomachine. Toutefois, cette solution dégrade l'acoustique de la turbomachine. En outre, elle est lourde à mettre en place, car elle nécessite l'installation d'importantes ouvertures additionnelles au niveau de la tuyère d'éjection.

Une autre solution connue consiste à réintroduire le flux d'air dans une veine secondaire de la turbomachine. Toutefois, ceci implique d'introduire un flux d'air chaud dans le flux froid de la veine secondaire, ce mélange causant un fort impact acoustique.

Il a également été proposé des turbomachines comportant un carter d'échappement équipé de conduites s'étendant depuis des ouvertures ménagées dans le carter d'échappement, les conduites étant reliées à une canalisation reliée à une ouverture prélevant un flux d'air au niveau du compresseur.

Une telle solution est cependant limitée par les procédés de fabrication classiquement utilisés pour produire ces pièces, généralement obtenues par assemblage de portions de pièces brutes de fonderie, et usinage des surfaces fonctionnelles.

La fonderie introduit notamment des contraintes de géométrie imposées à la forme finale de la pièce, qui peuvent réduire les performances potentielles de la pièce.

En effet, dans les turbomachines à double flux, un flux secondaire s'écoule concentriquement au flux de la veine primaire qui transite dans les étages de compresseurs et de turbines de la turbomachine.

Le flux secondaire s'écoule autour des compresseurs, turbines et carter d'échappement, et les éléments faisant saillie de ceux-ci génèrent des turbulences dans l'écoulement du flux secondaire.

Il est par exemple illustré en figure 2 un carter d'échappement 7 comprenant une bouche 8 connectée à une conduite 9 configurée pour acheminer un flux d'air jusqu'à la bouche 8 pour le réintroduire dans le flux de la veine primaire au niveau du carter d'échappement 7.

Une ligne de flux L du flux secondaire est également représentée, et présente une zone d'intersection I avec la conduite 9, ce qui génère des perturbations dans l'écoulement du flux secondaire.

Il existe donc un besoin de limiter ces perturbations, et d'améliorer ainsi les performances aérodynamiques du carter d'échappement.

Le document FR-3 016 654 divulgue un carter d'échappement pour une turbomachine s'étendant selon un axe longitudinal, comprenant :
- une virole annulaire présentant une paroi s'étendant axialement selon l'axe longitudinal depuis une première bride, une pluralité d'ouvertures étant ménagées à travers la paroi ;
- une pluralité de bouches formant chacune un canal s'étendant entre une admission respective et une des ouvertures.

### Présentation générale de l'invention

Un but de l'invention est d'améliorer les performances aérodynamiques des solutions de l'art antérieur.

Un autre but est d'améliorer les procédés de production des solutions de l'art antérieur.

A cet effet, on prévoit un carter d'échappement pour une turbomachine s'étendant selon un axe longitudinal, comprenant :
- une virole annulaire présentant une paroi s'étendant axialement selon l'axe longitudinal depuis une première bride, une pluralité d'ouvertures étant ménagées à travers la paroi ;
- une pluralité de bouches formant chacune un canal s'étendant entre une admission respective et une des ouverture, chaque bouche comportant :
- une bride d'accostage au niveau de l'admission présentant un bord radialement interne qui est au contact de la première bride de la virole annulaire,
- une paroi de bouche comprenant une portion de paroi radialement interne qui est formée par une surépaisseur réalisée sur la paroi de la virole.

Un tel carter d'échappement permet de rapprocher radialement la bouche et la bride d'accostage de la paroi de la virole, ce qui améliore la compacité du carter d'échappement et améliore ses performances aérodynamiques.

Avantageusement, l'invention est complétée par les caractéristiques suivantes, prises seules ou en combinaison :
- au moins une des bouches comporte en outre une pluralité d'ailettes positionnées dans le canal ; cela permet d'orienter le flux prélevé lorsqu'il est réintroduit à travers l'ouverture vers la veine d'écoulement, ce qui permet de limiter l'incidence entre le flux et le flux prélevé et ainsi de limiter les perturbations aérodynamiques induites par l'injection du flux prélevé ; en outre, cela permet de limiter la pénétration de flux dans l'ouverture, ce qui limite les risques de décollement du flux dans la veine d'écoulement ;
- la surépaisseur comporte au moins une cavité ; cela permet de limiter la masse du carter d'échappement, et le temps de fabrication lorsque la surépaisseur est réalisée par fabrication additive ;
- la première bride du carter d'échappement est formée avec la surépaisseur et possède des trous conformés chacun pour le passage d'une tige d'une vis d'assemblage entre la première bride et une bride d'un carter de turbine basse pression, et au moins un trou débouche dans une cavité qui est conformée pour recevoir une extrémité d'une tige d'une vis d'assemblage ;
- la surépaisseur est formée d'une structure en nid d'abeille ; cette structure offre un bon compromis masse/performances mécaniques.

Selon un autre aspect, l'invention propose un procédé de fabrication d'un carter d'échappement selon l'invention, dans lequel les bouches sont réalisées au moyen d'un procédé de fabrication additive. Cela permet de réaliser des géométries qui ne seraient pas réalisables autrement, et de limiter la quantité de matériau utilisée.

Selon un autre aspect, l'invention propose un ensemble de régulation de pression pour une turbomachine, comprenant :
- un carter d'échappement selon l'invention,
- un module de prélèvement configuré pour prélever un flux d'air pressurisé en amont du carter d'échappement, comprenant une conduite d'admission et une vanne apte à obturer ou non la conduite d'admission,
- un module de distribution configuré pour distribuer le flux prélevé aux bouches du carter d'échappement, comprenant une conduite de distribution dans laquelle débouche la conduite d'admission, et une pluralité de conduites d'injection connectées chacune à la conduite de distribution et respectivement à une des bouches.

Selon un autre aspect, l'invention propose une turbomachine comprenant un carter d'échappement selon l'invention.

Selon un autre aspect, l'invention propose un aéronef comprenant une turbomachine selon l'invention.

### Brève description des dessins

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique d'une turbomachine selon l'art antérieur ;
- la figure 2 est une représentation schématique en détail d'une coupe d'une bouche d'un carter d'échappement selon l'art antérieur ;
- la figure 3 est une représentation d'un ensemble de régulation de pression conforme à l'invention ;
- la figure 4 est une représentation schématique en détail d'une coupe d'une bouche d'un carter d'échappement selon l'invention.

### Description d'un ou plusieurs modes de mise en oeuvre et de réalisation

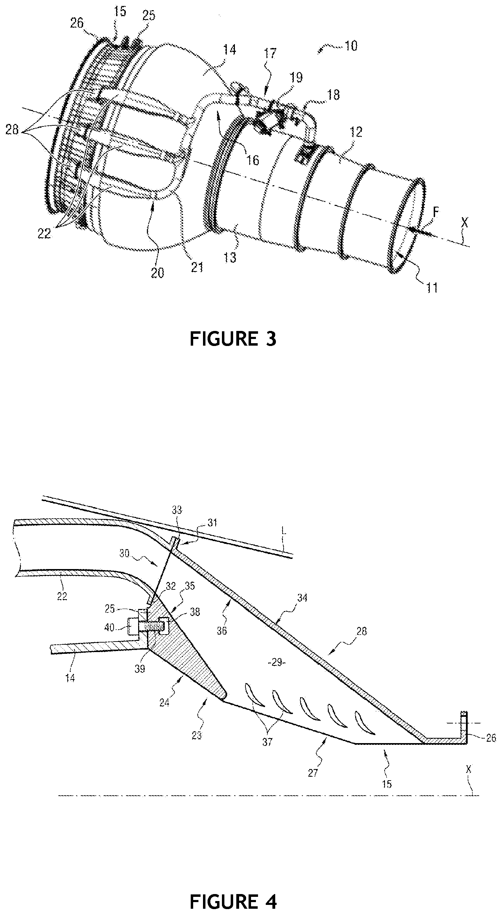

En référence à la figure 3, une turbomachine 10 comprend classiquement, dans le sens d'écoulement du flux F dans une veine d'écoulement 11 de la turbomachine 10, un compresseur haute pression 12, une turbine haute pression 13, et une turbine basse pression 14.

Les notions d'amont et d'aval se rapportent dans cette description au sens d'écoulement du flux dans les organes de la turbomachine 10. Les notions d'axial et de radial se rapportent à la géométrie cylindrique d'axe X selon lequel s'étend la turbomachine.

La turbomachine 1 comprend en outre un carter d'échappement 15, disposé en sortie de la turbine basse pression 14, en amont d'une tuyère d'éjection (non représentée).

La turbomachine 10 comporte en outre un ensemble de régulation de pression 16 configuré pour prélever un flux d'air pressurisé, qui peut par exemple être réalisé au niveau du compresseur haute pression 12, et réinjecter le flux d'air pressurisé au niveau du carter d'échappement 15. En d'autres termes, l'ensemble de régulation de pression 16 réalise une liaison fluidique parallèle à la veine d'écoulement 11, et est configuré pour réinjecter le flux prélevé au niveau du carter d'échappement 15. Avantageusement, le flux prélevé est réinjecté dans la veine d'écoulement 11 avec un nombre de Mach inférieur ou égal à 0.5, ce qui permet de limiter l'impact acoustique.

L'ensemble régulateur de pression 16 comprend, dans le mode de réalisation représenté :
- un module de prélèvement 17 configuré pour prélever le flux d'air dans la veine d'écoulement 11, de préférence en aval du compresseur haute pression 12, le module de prélèvement 17 comprenant une conduite d'admission 18 et une vanne 19 apte à obturer ou non la conduite d'admission 18,
- un module de distribution 20 configuré pour distribuer le flux prélevé au carter d'échappement 15, comprenant une conduite de distribution 21 dans laquelle débouche la conduite d'admission 18, et une pluralité de conduites d'injection 22 connectées à la conduite de distribution 21.

La vanne 19 permet de contrôler le débit du flux d'air prélevé par la conduite d'admission 18. L'ouverture et la fermeture de la vanne 19 sont classiquement contrôlées par le calculateur de l'aéronef, par exemple en fonction des commandes de vol du pilote.

Le carter d'échappement 15, représenté en figures 3 et 4, présente sensiblement une géométrie de révolution, et comprend :
- une virole annulaire 23 présentant une paroi 24 s'étendant d'amont vers l'aval entre une première bride 25 et une deuxième bride 26 et délimitant radialement extérieurement la veine d'écoulement 11, une pluralité d'ouvertures 27 étant ménagées à travers la paroi 24; et
- une pluralité de bouches 28 formant chacune un canal 29 s'étendant d'amont vers l'aval entre une admission 30 et une ouverture 27 respective, les bouches 28 étant configurées de manière à acheminer le flux prélevé depuis l'admission 30 vers l'ouverture 27.

Les conduites d'injection 22 sont ainsi connectées aux bouches 28, ce qui permet donc d'acheminer le flux d'air prélevé au niveau du compresseur haute pression 12 pour le réinjecter au niveau du carter d'échappement 15.

Avantageusement, les bouches 28 sont réparties circulairement autour du carter d'échappement 15, ce qui permet de répartir le flux réintroduit dans la veine d'écoulement 11 et donc de limiter la perturbation causée par la réintroduction du flux prélevé dans la veine d'écoulement 11.

Avantageusement, les bouches 28 sont réparties en groupes qui sont eux-mêmes répartis autour du carter d'échappement 15, ce qui permet de simplifier la structure et le montage du module de distribution 20, car il n'est pas nécessaire de distribuer le flux sur la totalité du tour du carter d'échappement 15.

Selon la réalisation illustrée en figure 3, la conduite d'admission 18 débouche dans une conduite de distribution 20 répartie en deux sections sensiblement symétriques et disposées de part et d'autre du carter d'échappement 15.

Sur l'exemple, chacune des sections de conduite de distribution 20 comporte trois conduites d'injection 22, chacune étant reliée à une bouche 28 du carter d'échappement 15.

Le carter d'échappement 15 comprend donc dans cet exemple six trous répartis de manière symétrique : trois trous d'un côté, et trois trous de l'autre. Cela permet de limiter la distorsion thermomécanique du carter d'échappement.

Etant donné que les ouvertures 27 ne communiquent pas entre elles, ceci permet d'améliorer davantage l'acoustique de l'écoulement en sortie des conduites d'injection 22, étant donné que les flux d'air en sortie des conduites d'injection 22 ne se mélangent pas.

Chaque bouche 28 comporte une bride d'accostage 31 au niveau de l'admission 30 présentant une extrémité radialement interne 32 et une extrémité radialement externe 33, l'extrémité radialement interne 32 de la bride d'accostage 31 étant au contact de la première bride 25 de la virole annulaire 23. Cela permet d'éviter un écoulement entre la première bride 25 et la bride d'accostage 31 qui serait perturbé par les obstacles et induirait des turbulences. Les performances aérodynamiques du carter d'échappement 15 sont améliorées.

Chaque bouche 28 comporte une paroi de bouche 34 délimitant le canal 29 et comprenant une portion de paroi radialement interne 35 et une portion de paroi radialement externe 36, la portion de paroi radialement interne 35 de la bouche étant formée par une surépaisseur réalisée sur la paroi 24 de la virole 23. Cela permet de positionner la bouche 28 au plus près radialement de la paroi 24 de la virole 23, ce qui améliore la compacité du carter d'échappement 15 et ses performances aérodynamiques.

En effet, cela permet de rapprocher radialement les conduites d'injection 22 du carter d'échappement 15, ce qui permet de ce fait de limiter l'intersection entre les conduites d'injection 22, les bouches 28 et les lignes de flux L d'un flux secondaire s'écoulant concentriquement au flux F, autour du compresseur haute pression 12, de la turbine haute pression 13, de la turbine basse pression 14 et du carter d'échappement 15. Cela permet donc de limiter les perturbations dans le flux secondaires, ce qui limite le bruit et améliore les performances aérodynamiques de la turbomachine.

La présence d'une ouverture 27 en configuration non débitante dans la veine d'écoulement 11 est assimilable à la présence d'une discontinuité, ou d'une paroi qui vient localement arrêter l'écoulement dans la veine d'écoulement 11 au niveau du carter d'échappement 15.

L'arrêt local de l'écoulement dans l'ensemble de régulation de pression 16 provoque une dissipation de l'énergie de l'écoulement qui se traduit par une augmentation des pertes et une réduction de la performance aérodynamique.

Afin d'améliorer l'acoustique, les bouches 28 présentent une inclinaison en leur extrémité dont la pente est d'un angle inférieur ou égal à 45°, par rapport à l'axe X longitudinal de la turbomachine, et préférentiellement inférieur à 35°.

Ceci permet ne pas avoir une cassure trop abrupte entre les directions de la veine d'écoulement 11 et du canal 29 des bouches 28. Une telle cassure aurait pour effet de provoquer des décollements massifs de couche limite, et par conséquent, une augmentation du bruit.

Avantageusement, au moins une des bouches 28 comporte une pluralité d'ailettes 37 positionnées dans le canal 29, à proximité de l'ouverture 27, les ailettes 37 étant configurées pour rediriger le flux de manière à limiter l'incidence du flux réintroduit dans la veine d'écoulement 11. Cela permet de réduire les perturbations du flux F transitant dans la veine d'écoulement 11 causées par la réintroduction du flux prélevé dans la veine d'écoulement 11. En outre, lorsque l'ensemble de régulation de pression 16 ne distribue pas de flux, les ailettes 37 limitent la propension du flux F à pénétrer dans l'ouverture 27, et limitent donc les pertes aérodynamiques dans la veine d'écoulement.

Avantageusement, la surépaisseur formant portion de paroi radialement interne 35 d'une bouche 28 peut comporter une ou plusieurs cavités 38 ou évidements, ce qui permet de limiter la masse du carter d'échappement 15.

Optionnellement, la première bride 25 du carter d'échappement 15 est formée dans la surépaisseur et possède des trous 39 conformés chacun pour le passage d'une tige d'une vis d'assemblage 40 entre la première bride 25 et une bride d'un carter de turbine basse pression 14. Avantageusement, les trous 39 débouchent chacun sur une cavité 38 qui est conformée pour recevoir une extrémité de tige de vis d'assemblage 40.

De préférence, les trous 39 sont taraudés pour coopérer avec un filetage de la tige de vis d'assemblage 40, et l'extrémité de tige se situe dans une cavité 38. Cela permet de se passer d'écrou d'assemblage, et ainsi de limiter la masse et le nombre de pièces de l'ensemble, ce qui simplifie les opérations d'assemblage.

Avantageusement, la surépaisseur est formée d'une structure en nid d'abeille, qui présente de bonnes caractéristiques mécaniques tout en limitant fortement la quantité de matière requise pour former un volume donné.

Un tel carter d'échappement 15 peut être fabriqué au moyen d'un procédé comprenant des étapes d'assemblage d'éléments obtenus par fonderie, qui sont des procédés connus, et peuvent en outre comprendre des étapes de fabrication additive. L'assemblage peut par exemple être obtenu par soudage ou par brasage.

Dans un mode de réalisation, les bouches 28 sont réalisées au moyen d'un procédé de fabrication additive, ou impression 3D. Ce type de procédé permet de réaliser des formes complexes tout en limitant le coût matière. En outre, cela permet de faciliter grandement la réalisation des ailettes 37 de la bouche 28.

Cela permet également de réaliser un matériau poreux pour former la surépaisseur formant portion de paroi radialement interne 35 d'une bouche 28. Cela permet de limiter la masse du carter d'échappement, de limiter le coût matière et également de raccourcir fortement la durée de fabrication de la surépaisseur tout en conservant des caractéristiques mécaniques nécessaires à la tenue mécanique du carter d'échappement dictée par son cahier des charges.

Les bouches 28 peuvent être fabriquées séparément puis rapportées et fixées sur la virole 23 par soudage ou brasage, ou alternativement être directement réalisées sur la virole 23 ou une portion de virole destinée à être assemblée à d'autres portions de virole pour former la virole 23 annulaire.

## Revendications

1. Carter d'échappement (15) pour une turbomachine s'étendant selon un axe longitudinal (X), comprenant :
- une virole annulaire (23) présentant une paroi (24) s'étendant axialement selon l'axe longitudinal (X) depuis une première bride (25), une pluralité d'ouvertures (27) étant ménagées à travers la paroi (24);
- une pluralité de bouches (28) formant chacune un canal (29) s'étendant entre une admission (30) respective et une des ouvertures (27), chaque bouche (28) comportant :
- une bride d'accostage (31) au niveau de l'admission (30) présentant un bord radialement interne (32) qui est au contact de la première bride (25) de la virole annulaire (23),
- une paroi de bouche (34) comprenant une portion de paroi radialement interne (35) qui est formée par une surépaisseur réalisée sur la paroi (24) de la virole (23).

2. Carter d'échappement (15) selon la revendication 1, dans lequel au moins une des bouches (28) comporte en outre une pluralité d'ailettes (37) dans le canal (29).

3. Carter d'échappement (15) selon l'une des revendications 1 ou 2, dans lequel la surépaisseur comporte au moins une cavité (38).

4. Carter d'échappement (15) selon la revendication 3, dans lequel la première bride (25) du carter d'échappement (15) est formée avec la surépaisseur et possède des trous (39) conformés chacun pour le passage d'une tige d'une vis d'assemblage (40) entre la première bride (25) et une bride d'un carter de turbine basse pression (14), et au moins un trou (39) débouche dans une cavité (38) qui est conformée pour recevoir une extrémité d'une tige d'une vis d'assemblage (40).

5. Carter d'échappement (15) selon l'une des revendications 1 à 4, dans lequel la surépaisseur est formée d'une structure en nid d'abeille.

6. Procédé de fabrication d'un carter d'échappement (15) selon l'une des revendications 1 à 5, dans lequel les bouches (28) sont réalisées au moyen d'un procédé de fabrication additive.

7. Ensemble de régulation de pression (16) pour une turbomachine, comprenant :
- un carter d'échappement (15) selon l'une des revendications 1 à 5,
- un module de prélèvement (17) configuré pour prélever un flux d'air pressurisé en amont du carter d'échappement (15), comprenant une conduite d'admission (18) et une vanne (19) apte à obturer ou non la conduite d'admission (18),
- un module de distribution (20) configuré pour distribuer le flux prélevé aux bouches (28) du carter d'échappement (15), comprenant une conduite de distribution (21) dans laquelle débouche la conduite d'admission (18), et une pluralité de conduites d'injection (22) connectées chacune à la conduite de distribution (21) et respectivement à une des bouches (28).

8. Turbomachine comprenant un carter d'échappement (15) selon l'une des revendications 1 à 5.

9. Aéronef comprenant une turbomachine selon la revendication 8.

## Patentansprüche

1. Abgangsgehäuse (15) für eine Turbomaschine, das sich gemäß einer Längsachse (X) erstreckt, umfassend:
- einen ringförmigen Ring (23), der eine Wand (24) aufweist, die sich axial gemäß der Längsachse (X) ab einem ersten Flansch (25) erstreckt, wobei eine Vielzahl von Öffnungen (27) durch die Wand (24) hindurch ausgebildet sind;
- eine Vielzahl von Mündungen (28), die jeweils einen Kanal (29) bilden, der sich zwischen einem entsprechenden Einlass (30) und einer der Öffnungen (27) erstreckt, wobei jede Mündung (28) aufweist:
- einen Andockflansch (31) im Bereich des Einlasses (30), der einen radial inneren Rand (32) aufweist, der mit dem ersten Flansch (25) des ringförmigen Rings (23) im Kontakt ist,
- eine Mündungswand (34), die einen radial inneren Wandabschnitt (35) umfasst, der von einer Überdicke gebildet ist, die auf der Wand (24) des Rings (23) ausgebildet ist.

2. Abgangsgehäuse (15) nach Anspruch 1, wobei mindestens eine der Mündungen (28) ferner eine Vielzahl von Flügeln (37) in dem Kanal (29) aufweist.

3. Abgangsgehäuse (15) nach einem der Ansprüche 1 oder 2, wobei die Überdicke mindestens einen Hohlraum (38) aufweist.

4. Abgangsgehäuse (15) nach Anspruch 3, wobei der erste Flansch (25) des Abgangsgehäuses (15) mit der Überdicke gebildet ist und Löcher (39) besitzt, die jeweils für den Durchgang eines Schafts einer Verbindungsschraube (40) zwischen dem ersten Flansch (25) und einem Flansch eines Niederdruck-Turbinengehäuses (14) ausgebildet sind, und mindestens ein Loch (39) in einem Hohlraum (38) ausmündet, der ausgebildet ist, um ein Ende eines Schafts einer Verbindungsschraube (40) aufzunehmen.

5. Abgangsgehäuse (15) nach einem der Ansprüche 1 bis 4, wobei die Überdicke von einer Bienenwabenstruktur gebildet ist.

6. Verfahren zur Herstellung eines Abgangsgehäuses (15) nach einem der Ansprüche 1 bis 5, wobei die Mündungen (28) mittels eines additiven Fertigungsverfahrens hergestellt sind.

7. Anordnung zur Druckregulierung (16) für eine Turbomaschine, umfassend:
- ein Abgangsgehäuse (15) nach einem der Ansprüche 1 bis 5,
- ein Entnahmemodul (17), das dazu ausgelegt ist, einen Druckluftstrom vor dem Abgangsgehäuse (15) zu entnehmen, umfassend eine Einlassleitung (18) und ein Ventil (19), das geeignet ist, die Einlassleitung (18) zu verschließen oder nicht,
- ein Verteilermodul (20), das dazu ausgelegt ist, den entnommenen Strom auf die Mündungen (28) des Abgangsgehäuses (15) zu verteilen, umfassend eine Verteilerleitung (21), in die die Einlassleitung (18) mündet, und eine Vielzahl von Einleitungsleitungen (22), die jeweils mit der Verteilerleitung (21) und jeweils mit einer der Mündungen (28) verbunden sind.

8. Turbomaschine, umfassend ein Abgangsgehäuse (15) nach einem der Ansprüche 1 bis 5.

9. Flugzeug, umfassend eine Turbomaschine nach Anspruch 8.

## Claims

1. An exhaust case (15) for a turbomachine extending along a longitudinal axis (X), comprising:
- an annular shroud (23) having a wall (24) extending axially along the longitudinal axis (X) from a first flange (25), a plurality of openings (27) being provided through the wall (24);
- a plurality of mouths (28) each forming a channel (29) extending between a respective inlet (30) and one of the openings (27), each mouth (28) having:
- a docking flange (31) at the inlet (30) having a radially inner edge (32) which is in contact with the first flange (25) of the annular shroud (23),
- a mouth wall (34) comprising a radially inner wall portion (35) which is formed by a thickened section made on the wall (24) of the shroud (23).

2. The exhaust case (15) according to claim 1, wherein at least one of the mouths (28) further has a plurality of fins (37) in the channel (29).

3. The exhaust case (15) according to one of claims 1 or 2, wherein the thickened section has at least one cavity (38).

4. The exhaust case (15) according to claim 3, wherein the first flange (25) of the exhaust case (15) is formed with the thickened section and has holes (39) each shaped for the passage of a rod of an assembly screw (40) between the first flange (25) and a flange of a low-pressure turbine case (14), and at least one hole (39) opening into a cavity (38) which is shaped to receive an end of a rod of an assembly screw (40).

5. The exhaust case (15) according to one of claims 1 to 4, wherein the thickened section is formed with a honeycomb structure.

6. A method for manufacturing an exhaust case (15) according to one of claims 1 to 5, wherein the mouths (28) are produced by means of an additive manufacturing method.

7. A pressure regulation unit (16) for a turbomachine, comprising:
- an exhaust case (15) according to one of claims 1 to 5,
- a bleed module (17) configured to bleed a pressurised air flow upstream of the exhaust case (15), comprising an inlet pipe (18) and a valve (19) that is able to shut off, or not, the inlet pipe (18),
- a distribution module (20) configured to distribute the bleed flow to the mouths (28) of the exhaust case (15), comprising a distribution pipe (21) into which the inlet pipe (18) opens, and a plurality of injection pipes (22) each connected to the distribution pipe (21) and respectively to one of the mouths (28).

8. A turbomachine comprising an exhaust case (15) according to one of claims 1 to 5.

9. An aircraft comprising a turbomachine according to claim 8.
